# EUROPEAN PATENT APPLICATION

(11) **EP 4 369 766 A1**
(43) Date of publication of application: **15.05.2024**
(21) Application number: 22837020.1
(22) Date of filing: 07.07.2022
(51) Int. Cl.: H04W 24/02, H04W 28/02, H04W 28/10, H04W 72/04

(54) **TRANSMISSION METHOD, TERMINAL, AND NETWORK SIDE DEVICE**

(30) Priority: 08.07.2021 CN 202110776218
(71) Applicant: Vivo Mobile Communication Co., Ltd., Dongguan, Guangdong 523863 (CN)
(72) Inventor: WU, Kai, Dongguan, Guangdong 523863 (CN); WANG, Lihui, Dongguan, Guangdong 523863 (CN)
(74) Representative: Lavoix
(86) International application number: PCT/CN2022/104409
(87) International publication number: WO 2023/280275

(57) **Abstract**

This application discloses a transmission method, a terminal, and a network-side device, and pertains to the field of wireless communication technologies. The transmission method in embodiments of this application includes: determining, by a terminal, a transmission mode for a signal and/or a channel on a second BWP based on transmission configuration information on a first BWP and/or a first SSB set; and transmitting, by the terminal, the signal and/or the channel on the second BWP based on the transmission mode.

## Description

### CROSS-REFERENCE TO RELATED APPLICATIONS

The present invention claims priority to Chinese Patent Application No. 202110776218.6, filed with the China National Intellectual Property Administration on July 8, 2021 and entitled "TRANSMISSION METHOD, TERMINAL, AND NETWORK-SIDE DEVICE", which is incorporated herein by reference in its entirety.

### TECHNICAL FIELD

This application pertains to the field of wireless communication technologies, and specifically, relates to a transmission method, a terminal, and a network-side device.

### BACKGROUND

In a related communication technology, bandwidth supported by a reduced capability (reduced capability, redcap) terminal (User Equipment, UE, which may also be referred to as a terminal device or a user terminal) is less than or equal to bandwidth supported by common UE. Therefore, when configuring a bandwidth part (Bandwidth Part, BWP) for the common UE, a network side may further configure an additional BWP for the redcap terminal, so that bandwidth of the additional BWP is within a capability range of the redcap UE. In addition, the additional BWP is configured, so that transmission by the redcap terminal and transmission by a different terminal can be divided, to be specific, transmission is performed on different resources. This avoids overload or congestion caused by simultaneously performing transmission by the common terminal and the redcap terminal on a same resource.

However, during transmission on the additional BWP, transmission behavior, for example, PDCCH transmission behavior, PDCCH monitoring behavior, or uplink transmission resource determining behavior, of the terminal on the BWP is currently not clear.

### SUMMARY

Embodiments of this application provide a transmission method, a terminal, and a network-side device, to resolve a problem that transmission behavior on an additional BWP is not clear.

According to a first aspect, a transmission method is provided, including: determining, by a terminal, a transmission mode for a signal and/or a channel on a second BWP based on transmission configuration information on a first BWP and/or a first SSB set; and transmitting, by the terminal, the signal and/or the channel on the second BWP based on the transmission mode.

According to a second aspect, a transmission method is provided, including: determining, by a network-side device, a transmission mode for a signal and/or a channel on a second BWP based on transmission configuration information on a first BWP and/or a first SSB set; and transmitting, by the network-side device, the signal and/or the channel on the second BWP based on the transmission mode.

According to a third aspect, a transmission apparatus is provided, including: a first determining module, configured to determine a transmission mode for a signal and/or a channel on a second BWP based on transmission configuration information on a first BWP and/or a first SSB set; and a first transmission module, configured to transmit the signal and/or the channel on the second BWP based on the transmission mode.

According to a fourth aspect, a transmission apparatus is provided, where the apparatus includes: a second determining module, configured to determine a transmission mode for a signal and/or a channel on a second BWP based on transmission configuration information on a first BWP and/or a first SSB set; and a second transmission module, configured to transmit the signal and/or the channel on the second BWP based on the transmission mode.

According to a fifth aspect, a terminal is provided, including a processor and a communication interface, where the communication interface is coupled to the processor, and the processor is configured to run a program or instructions, to implement the method according to the first aspect.

According to a sixth aspect, a terminal is provided, including a processor and a communication interface, where the communication interface is coupled to the processor, and the processor is configured to run a program or instructions, to implement the steps of the method according to the first aspect.

According to a seventh aspect, a network-side device is provided, where the network-side device includes a processor, a memory, and a program or instructions stored in the memory and capable of running on the processor, and when the program or instructions are executed by the processor, the steps of the method according to the second aspect are implemented.

According to an eighth aspect, a network-side device is provided, including a processor and a communication interface, where the communication interface is coupled to the processor, and the processor is configured to run a program or instructions, to implement the steps of the method according to the second aspect.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions, to implement the method according to the first aspect, or implement the method according to the second aspect.

According to an eleventh aspect, a computer program or program product is provided, where the computer program or program product is stored in a non-transitory storage medium, and when the program or program product is executed by at least one processor, the method according to the first aspect is implemented, or the method according to the second aspect is implemented.

In the embodiments of this application, the terminal determines the transmission mode for the signal and/or the channel on the second BWP based on the transmission configuration information on the first BWP and/or the first SSB set, and transmits the signal and/or the channel on the second BWP based on the transmission mode. This can determine transmission behavior on the second BWP, reduce transmission load on the first BWP, avoid problems such as transmission congestion, and improve wireless communication performance.

### BRIEF DESCRIPTION OF DRAWINGS

FIG. 1 is a schematic structural diagram of a wireless communication system according to an example embodiment of this application;
FIG. 2 is a schematic flowchart of a transmission method according to an example embodiment of this application;
FIG. 3 is a schematic flowchart of a transmission method according to another example embodiment of this application;
FIG. 4a to FIG. 4c are schematic diagrams of several relationships between a first SSB set and a second SSB set according to an example embodiment of this application;
FIG. 4d is a schematic diagram of an SSB monitoring window according to an example embodiment of this application;
FIG. 4e is a schematic diagram of a transmission process between a first BWP and a second BWP according to an example embodiment of this application;
FIG. 4f is a schematic diagram of a relationship between a first SSB set and a second SSB set according to another example embodiment of this application;
FIG. 5 is a schematic flowchart of a transmission method according to another example embodiment of this application;
FIG. 6 is a schematic structural diagram of a transmission apparatus according to an example embodiment of this application;
FIG. 7 is a schematic structural diagram of a transmission apparatus according to another example embodiment of this application;
FIG. 8 is a schematic structural diagram of a terminal according to an example embodiment of this application; and
FIG. 9 is a schematic structural diagram of a network-side device according to an example embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in this specification and the claims of this application are used to distinguish between similar objects rather than to describe a specific order or sequence. It should be understood that terms used in this way are interchangeable in appropriate circumstances, so that the embodiments of this application can be implemented in an order other than the order illustrated or described herein. In addition, the objects distinguished by "first" and "second" usually belong to one category, and the number of objects is not limited. For example, there may be one or more first objects. In addition, in this specification and the claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably, and the technologies described herein may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communication system.

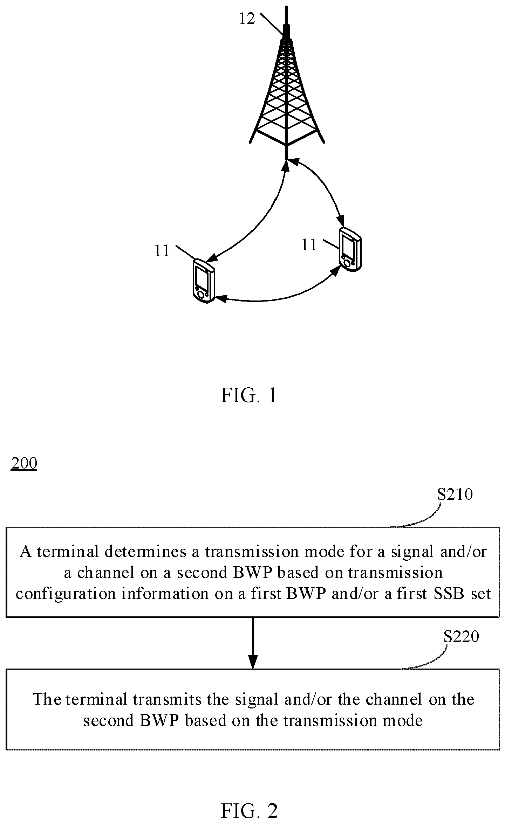

FIG. 1 is a schematic structural diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a smartwatch, a band, a headset, glasses, or the like. It should be noted that a specific type of the terminal 11 is not limited in the embodiments of this application. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

The following describes in detail the technical solutions provided in the embodiments of this application with reference to the accompanying drawings and by using some embodiments and application scenarios thereof.

FIG. 2 is a schematic flowchart of a transmission method 200 according to an example embodiment of this application. The method 200 may be performed by a terminal but is not limited thereto, and may be specifically performed by hardware and/or software installed in the terminal. In this embodiment, the method 200 may include at least the following steps.

S210: The terminal determines a transmission mode for a signal and/or a channel on a second BWP based on transmission configuration information on a first BWP and/or a first SSB set.

The first BWP may be understood as a BWP configured by a network-side device for a common terminal, for example, an initial uplink BWP or an initial downlink BWP, for transmitting a physical downlink shared channel (Physical downlink shared channel, PDSCH) for a system information block (System Information Block, SIB) or a paging message, a physical downlink control channel (Physical downlink control channel, PDCCH) for scheduling the PDSCH, and the like.

Correspondingly, the second BWP may be understood as an additional BWP configured by the network-side device for a redcap terminal, in other words, the second BWP is a BWP configured for the redcap terminal. In addition, the second BWP may alternatively be a BWP other than the additional BWP. This is not limited. In this embodiment, the second BWP may include an uplink BWP and/or a downlink BWP.

Further, the transmission configuration information on the first BWP may be a channel type, a channel/signal transmission occasion, or the like on the first BWP.

An SSB in the first synchronization signal block set (Synchronization Signal and PBCH block set, SSB set) is used by the terminal to perform synchronization, obtain system information, perform measurement and assessment, and the like. In this embodiment, the first SSB set may include N (N is an integer greater than or equal to 1) SSBs within preset duration (for example, 5 ms), and characteristics of the N SSBs meet at least one of the following characteristics (1) and (2).

### (1) Being a cell-defined (Cell Defining, CD)-SSB.

This may be understood as that a physical broadcast channel (Physical broadcast channel, PBCH) in the SSB includes indication information for a monitoring occasion (monitoring occasion, MO) for a PDCCH for scheduling a SIB.

### (2) Being configured within the first BWP. To be specific, SSBs in the first SSB set may be transmitted on the first BWP.

The SSBs in the first SSB set meet (1) and (2), to be specific, the SSBs are configured within a BWP (for example, the first BWP). In this way, the terminal and the network-side device can perform uplink and downlink data transmission within the BWP without frequently changing a frequency or bandwidth for transmission or reception, to be specific, the terminal and the network-side device can complete data transmission, SSB-based synchronization, measurement, and AGC (Automatic Gain Control, automatic gain control), and the like within the same frequency and bandwidth. This reduces implementation complexity.

S220: The terminal transmits the signal and/or the channel on the second BWP based on the transmission mode.

The transmission mode may include a type of a channel/signal that can be transmitted by the terminal on the second BWP, a transmission occasion (for example, a monitoring occasion or a sending occasion) for a channel/signal to be transmitted on the second BWP, a channel/signal that can serve as a transmission resource during transmission on the second BWP, and the like.

In this embodiment, the terminal may operate in a half-duplex mode on a frequency division duplex (Frequency Division Duplex, FDD) frequency band, or the terminal may operate on an asymmetric spectrum. To be specific, the terminal and/or the network-side device cannot simultaneously perform transmission and reception. For example, in a case that the network-side device transmits an SSB or perform other downlink transmission at any frequency location on a symbol, the terminal no longer performs uplink transmission on the same symbol, to avoid transmission overlapping.

In addition, the terminal determines the transmission mode for the signal and/or the channel on the second BWP based on the transmission configuration information on the first BWP and/or the first SSB set, and transmits the signal and/or the channel on the second BWP based on the transmission mode. This can determine transmission behavior on the second BWP, reduce transmission load on the first BWP, avoid problems such as transmission congestion, and improve wireless communication performance.

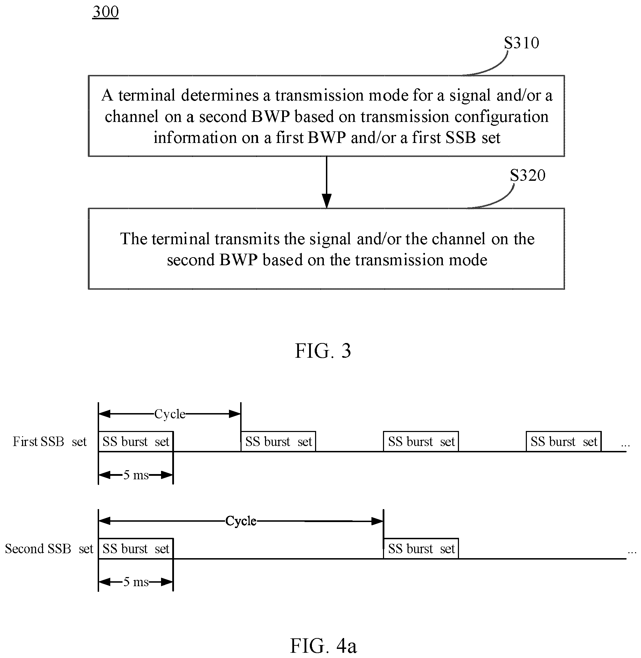

FIG. 3 is a schematic flowchart of a transmission method 300 according to an example embodiment of this application. The method 300 may be performed by a terminal but is not limited thereto, and may be specifically performed by hardware and/or software installed in the terminal. In this embodiment, the method 300 may include at least the following steps.

S310: The terminal determines a transmission mode for a signal and/or a channel on a second BWP based on transmission configuration information on a first BWP and/or a first SSB set.

It can be understood that, for an implementation process of S310, reference may be made to related descriptions in the method embodiment 200. In addition, in a possible implementation, the transmission configuration on the first BWP may include at least one of the following (1) and (2):
(1) an MO for a first PDCCH, where the first PDCCH is used for scheduling a SIB; and
(2) an MO for a second PDCCH, where the second PDCCH is a paging PDCCH.

In another implementation, the signal on the second BWP may include a second SSB set, where the second SSB set may be configured within a second BWP.

Based on this, because the terminal needs to periodically receive SSBs for synchronization, measurement, and the like, the network-side device may transmit SSBs in the second SSB set within bandwidth of a second downlink BWP or at adjacent frequency locations, to avoid a problem that the terminal needs to frequently switch a frequency when performing SSB reception and other downlink reception.

In an implementation, a periodicity of the second SSB set may be different from a periodicity of the first SSB set. For example, the periodicity of the second SSB set may be not less than (for example, greater than or equal to) the periodicity of the first SSB set. For example, as shown in FIG. 4a, the periodicity of the second SSB set is twice that of the first SSB set. In other words, a transmission time period (half-frame) of the second SSB set is a subset of a transmission time period (half-frame) of the first SSB set. For the second SSB set, a transmission periodicity longer than that of the first SSB set is used in this embodiment, and an SSB can be transmitted within a frequency range within the second BWP. This meets a requirement for performing synchronization, measurement, and the like by the terminal, and can further reduce resource overheads and power consumption for transmitting an SSB in the second SSB set.

In addition, because an SSB in an SSB set is transmitted within duration, in addition to increasing a transmission periodicity of the second SSB set, the number of SSBs transmitted within duration, namely, the number of SSBs included in the SSB set, may alternatively be reduced in this embodiment, to reduce resource overheads and power consumption for transmitting an SSB in the second SSB set. Specifically, assuming that the terminal needs to receive SSBs in the second SSB set, index values of the SSBs in the second SSB set are the same as index values of the SSBs in the first SSB set, or index values of the SSBs in the second SSB set are a subset of index values of the SSBs in the first SSB set. In other words, when the network-side device transmits the second SSB set, the index values of the SSBs in the second SSB set may be the same as the index values of the SSBs in the first SSB set, or the index values of the SSBs included in the second SSB set are a subset of the index values of the SSBs included in the first SSB set.

For example, it is assumed that 1 ≤ M ≤ N ≤ L, *n*₁, *n*₂,···*n_{N}* denotes an index value of an SSB in the first SSB set, and *m*₁, *m*₂,···*m_{M}* denotes an index value of an SSB in the second SSB set. In this case, (*m*₁,*m*₂,*···m_{M}*) ∈ (*n*₁, *n*₂,···*n_{N}*), where L is the maximum number of SSBs that can be transmitted within preset duration.

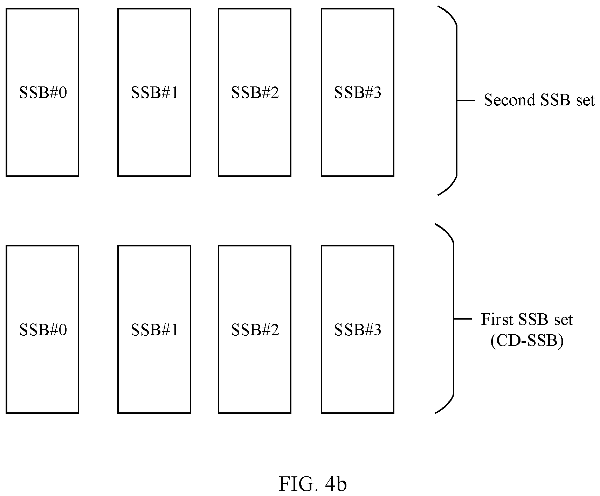

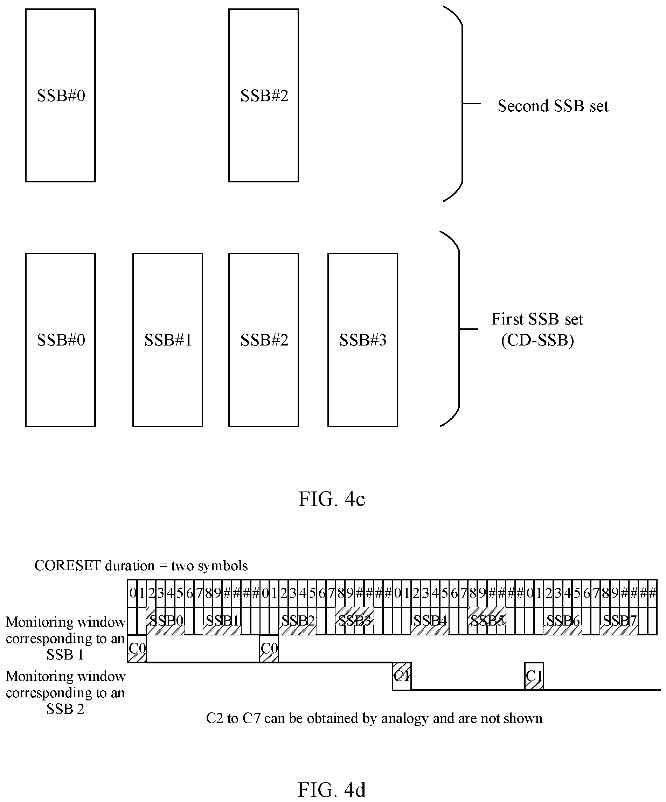

For another example, as shown in FIG. 4b, the index values SSB#0, SSB#1, SSB#2, and SSB#3 of the SSBs in the second SSB set are the same as the index values SSB#0, SSB#1, SSB#2, and SSB#3 of the SSBs in the first SSB set; or as shown in FIG. 4c, the index values SSB#0 and SSB#2 of the SSBs in the second SSB set are a subset of the index values SSB#0, SSB#1, SSB#2, and SSB#3 of the SSBs in the first SSB set.

In this case, in a case that an index value of a second SSB in the second SSB set is the same as an index value of a first SSB in the first SSB set, a first parameter of the first SSB is the same as or quasi-co-located (Quasi co-location, QCL) with a first parameter of the second SSB. In this embodiment, SSBs with a same index value are transmitted in a same time unit, and at a same moment, due to complexity of implementation, a network can use only one beam or a spatial transmission filter (Spatial Transmission Filter, STF) for signal transmission on some frequency bands. Therefore, two SSBs at different frequency locations may also be transmitted by using a same beam. To be specific, when index values of SSBs in the two SSB sets are the same, the terminal may assume that the two SSBs are quasi-co-located, to reduce complexity of network implementation.

Optionally, the first parameter may include at least one of a Doppler shift (Doppler shift), a Doppler spread (Doppler spread), an average delay (average delay), a delay spread (delay spread), a spatial receive parameter (Spatial Rx parameter), and an average gain (Average gain).

It should be noted that, for the second SSB set and the first SSB set, the SSBs in the second SSB set may be at least partially the same as or different from the SSBs in the first SSB set. This is not limited herein.

Further, in addition to the second SSB set, the network-side device may further configure transmission (for example, a first PDCCH and a second PDCCH) for a SIB-1 and a paging message on a first downlink BWP. Correspondingly, the network-side device may also configure PDCCH transmission for the SIB-1 and the paging message on the second BWP. This avoids excessive overheads caused by transmission on the first BWP.

In this case, the channel on the second BWP in this embodiment may include at least one of the following (1) to (3).
(1) A third PDCCH, where the third PDCCH is used for scheduling a SIB.

Optionally, the third PDCCH may have M MOs, and each MO for the third PDCCH is associated with an SSB with a corresponding index value in the second SSB set, where M is an integer greater than 0.

(2) A fourth PDCCH, where the fourth PDCCH is a paging PDCCH.

Optionally, the fourth PDCCH may have M MOs, and each MO for the fourth PDCCH is associated with an SSB with a corresponding index value in the second SSB set, where M is an integer greater than 0.

(3) A physical uplink channel, where the physical uplink channel includes a PUSCH and/or a PUCCH.

Optionally, a transmission mode for the physical uplink channel on the second BWP may include: whether to transmit the physical uplink channel; and/or whether to use the physical uplink channel as a transmission resource.

It can be understood that, corresponding to the terminal, the network-side device may also determine a transmission mode for the signal and/or the channel on the second BWP, for example, a transmission mode for an SSB in the second SSB set, a transmission mode for the third PDCCH, a transmission mode for the fourth PDCCH, or a reception mode for the physical uplink channel, based on the transmission configuration information on the first BWP and/or the first SSB set. For this, refer to descriptions of the transmission method on the terminal side in this application. To avoid repetition, this is not limited herein.

S320: The terminal transmits the signal and/or the channel on the second BWP based on the transmission mode.

It can be understood that, for an implementation of S320, reference may be made to related descriptions in the method embodiment 200. In addition, in a possible implementation, because different signals and/or channels have different transmission modes on the second BWP, the transmission mode for the channel on the second BWP is described below by using each of the third PDCCH, the fourth PDCCH, the physical uplink channel, and an SSB in the second SSB set as an example.

### Example 1

Assuming that the channel on the second BWP is the third PDCCH, the transmitting, by the terminal, the third PDCCH on the second BWP based on the transmission mode includes at least one of the following (11) to (13):
(11) monitoring the third PDCCH on a first MO based on the second BWP, where the first MO and the MO for the first PDCCH belong to a same time unit;
(12) monitoring the third PDCCH on a second MO based on the second BWP, where the second MO and an MO for a first PDCCH associated with a third SSB belong to a same time unit, and the third SSB is an SSB that is in the first SSB set and that has a same index value as an SSB in the second SSB set; and
(13) in a case that an SSB with a third index value in the first SSB set is transmitted but an SSB with the third index value in the second SSB set is not transmitted, skipping, based on the second BWP, monitoring the third PDCCH in a time unit corresponding to a third MO, where the third MO and a first PDCCH associated with the SSB with the third index value in the first SSB set belong to a same time unit.

Optionally, the time unit mentioned in the foregoing (11) to (13) and subsequent embodiments may be a slot, a symbol, a frame, or the like. This is not limited herein.

Based on the foregoing descriptions of Example 1, an implementation process of Example 1 is further described below with reference to the accompanying drawings.

For the first PDCCH or the second PDCCH (to be specific, a PDCCH for scheduling the SIB-1), an MO for the PDCCH on the first downlink BWP (an initial downlink BWP), namely, the MO for the first PDCCH, is indicated by a PBCH in an SSB in the first SSB set. In this case, the MO for the first PDCCH is associated with an SSB with a corresponding index value in the corresponding first SSB set, and an association relationship may be shown in FIG. 4d.

It is assumed that the index values of the SSBs in the second SSB set are exactly the same as the index values of the SSBs in the first SSB set. In this case, an MO for the third PDCCH to be transmitted on the second downlink BWP is the same as the MO for the first PDCCH.

It is assumed that the SSBs in the second SSB set are a subset of the SSBs in the first SSB set, to be specific, SSBs in the first SSB set that have specific index values and that are transmitted are not transmitted in the second SSB set, and an MO for the third PDCCH on the second downlink BWP is associated with an index value of an SSB in the second SSB set. In this case, a location of the MO for the third PDCCH is the same as that of a symbol to which an MO, associated with an SSB with a same index value, for the first PDCCH on the first downlink BWP belongs.

For example, it is assumed that transmitted SSBs in the first SSB set are an SSB#0, an SSB#1, an SSB#2, and an SSB#3, and transmitted SSBs in the second SSB set are an SSB#0, an SSB#2, and an SSB#3. In this case, locations of MOs, associated with the three SSBs, for the third PDCCH on the second downlink BWP are the same as locations of symbols to which MOs, associated with the SSB#0, the SSB#2, and the SSB#3 in the first SSB set, for the first PDCCH on the first downlink BWP belong. On the second downlink BWP, the terminal does not monitor the third PDCCH on a symbol to which a PDCCH MO associated with the SSB#1 belongs.

In this embodiment, corresponding to the monitoring the third PDCCH by the terminal, the transmitting, by the network-side device, the third PDCCH on the second BWP may include: in a case that MOs for the third PDCCH and SSBs in the second SSB set are in a one-to-one correspondence, transmitting the third PDCCH on the second BWP according to an order of transmission time of the SSBs in the second SSB set, where transmission parameters of the third PDCCH and an SSB corresponding to the third PDCCH are quasi-co-located.

### Example 2

Assuming that the channel on the second BWP is the third PDCCH, the transmitting, by the terminal, the fourth PDCCH on the second BWP based on the transmission mode includes at least one of the following (21) to (23):
(21) monitoring the fourth PDCCH on a fourth MO based on the second BWP, where the fourth MO and the MO for the second PDCCH belong to a same time unit;
(22) monitoring the fourth PDCCH on a fifth MO based on the second BWP, where the fifth MO and an MO for a second PDCCH associated with a fourth SSB belong to a same time unit, and the fourth SSB is an SSB that is in the first SSB set and that has a same index value as an SSB in the second SSB set; and
(23) in a case that an SSB with a fourth index value in the first SSB set is transmitted but an SSB with the fourth index value in the second SSB set is not transmitted, skipping, based on the second BWP, monitoring the fourth PDCCH in a time unit corresponding to a sixth MO, where the sixth MO and an MO for a second PDCCH associated with the SSB with the fourth index value in the first SSB set belong to a same time unit.

For the channel transmission mode in Example 1 and Example 2, in a case that an MO for a fifth PDCCH is associated with a fifth SSB with a fifth index value, a second parameter of the fifth PDCCH is the same as or quasi-co-located with a second parameter of the fifth SSB.

In a case that the fifth PDCCH is the first PDCCH or the second PDCCH, the fifth SSB belongs to the first SSB set. In a case that the fifth PDCCH is the third PDCCH or the fourth PDCCH, the fifth SSB belongs to the second SSB set.

The second parameter includes at least one of the following: a Doppler shift, a Doppler spread, an average delay, a delay spread, a spatial receive parameter, and an average gain.

Based on the foregoing descriptions of Example 2, an implementation process of Example 2 is further described below with reference to the accompanying drawings.

For the paging message, the terminal monitors the second PDCCH or the fourth PDCCH (namely, a paging PDCCH) on a paging occasion (PO), and one PO may include MOs for paging PDCCHs corresponding to a plurality of SSBs transmitted by the network-side device (MOs for the second PDCCH or MOs for the fourth PDCCH correspond, according to an order of index values, to the SSBs transmitted by the network-side device, and the paging PDCCH is monitored on an initial downlink BWP (the first downlink BWP)).

It is assumed that the index values of the SSBs in the second SSB set are exactly the same as the index values of the SSBs in the first SSB set. In this case, an MO for the fourth PDCCH on the second downlink BWP is the same as the MO for the second PDCCH.

It is assumed that the SSBs in the second SSB set are a subset of the SSBs in the first SSB set, to be specific, SSBs in the first SSB set that have specific index values and that are transmitted are not transmitted in the second SSB set, and an MO for the fourth PDCCH on the second downlink BWP is associated with an index value of an SSB in the second SSB set. In this case, a location of the MO for the fourth PDCCH is the same as that of a symbol to which an MO, associated with an SSB with a same index value, for the second PDCCH on the first downlink BWP belongs.

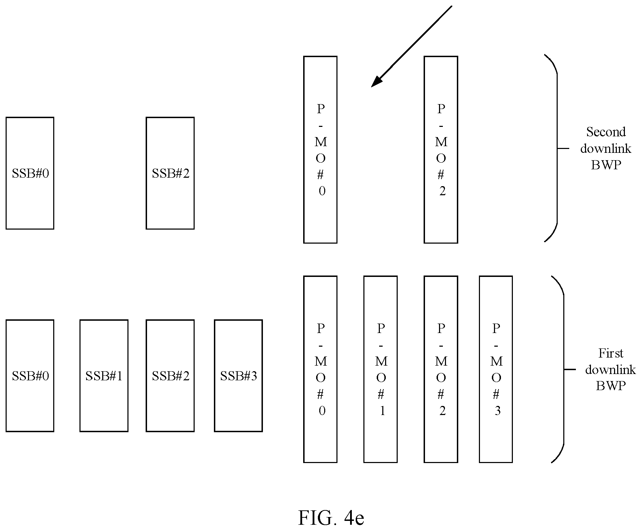

An example is shown in FIG. 4e. On the first downlink BWP, the first SSB set includes an SSB#0, an SSB#1, an SSB#2, and an SSB#3, and one PO includes MOs (for example, a P-MO#0, a P-MO#1, a P-MO#2, and a P-MO#3) for paging PDCCHs associated with the four SSBs.

It is assumed that the second SSB set is a subset of transmitted SSBs in the first SSB set. For example, transmitted SSBs in the second SSB set are an SSB#0 and an SSB#2. In this case, locations of MOs, associated with the two SSBs, for the fourth PDCCH on the second downlink BWP are the same as locations of symbols to which MOs, associated with SSBs with same index values, for the second PDCCH on the first downlink BWP belong. In addition, on the second downlink BWP, the terminal does not monitor the fourth PDCCH on symbols to which PDCCH MOs corresponding to the SSB#1 and the SSB#3 belong.

Particularly, on some high frequency bands, the network-side device cannot transmit an SSB at different frequencies at a same moment, or transmit a PDCCH by using different beams. Therefore, SSBs that have same indexes and that are transmitted at a same moment are transmitted by using a same beam. When a paging PDCCH or a PDCCH for scheduling the SIB-1 is associated with SSBs with same indexes, a same beam is also used at a transmit end. PDCCH MOs, on different BWPs, that are associated with a same SSB are required to be the same, so that the network can transmit PDCCHs associated with a same SSB index number at different frequencies by using a same beam. This reduces complexity of network implementation.

In this embodiment, corresponding to the monitoring the fourth PDCCH by the terminal, the transmitting, by the network-side device, the fourth PDCCH on the second BWP includes: in a case that MOs for the fourth PDCCH and SSBs in the second SSB set are in a one-to-one correspondence, transmitting the fourth PDCCH on the second BWP according to an order of transmission time of the SSBs in the second SSB set, where transmission parameters of the fourth PDCCH and an SSB corresponding to the fourth PDCCH are quasi-co-located.

In Example 1 and Example 2, in a case that the network-side device configures the second downlink BWP and the second downlink BWP includes monitoring occasions for third and fourth PDCCHs, the terminal may directly determine, based on the SSBs included in the second SSB set, SSB-associated third and fourth PDCCHs that can be monitored on the second downlink BWP, and corresponding PDCCH MOs.

### Example 3

Assuming that the channel on the second BWP is the physical uplink channel, the transmitting, by the terminal, the physical uplink channel on the second BWP based on the transmission mode includes: skipping transmitting the physical uplink channel in a first time unit. To be specific, in a case that the network-side device configures the terminal to be on a second uplink BWP and indicates that transmission is to be performed on the second uplink BWP, the terminal does not transmit the physical uplink channel (for example, a PUSCH or a PUCCH) in the first time unit if the first time unit is used for any one of the following (31) to (36). This can avoid a conflict between an uplink transmission resource and a downlink transmission resource (for example, transmission resources for transmitting an SSB in the first SSB set, an SSB in the second SSB set, the first PDCCH, and the second PDCCH in (31) to (36)), and improve wireless communication performance.

In this embodiment, the first time unit includes at least one of the following (31) to (36):
(31) a time unit in which an SSB in the first SSB set is transmitted;
(32) a time unit in which an SSB in the second SSB set is transmitted, where
an index value of the SSB in the second SSB set in (32) may be the same as an index value of the SSB in the first SSB set in (31), or may be a subset of the index value of the SSB in the first SSB set in (31);
(33) a time unit to which the MO for the first PDCCH belongs;
(34) a time unit to which the MO for the second PDCCH belongs;
(35) a time unit to which an MO for the third PDCCH belongs, where
the MO for the third PDCCH may be the same as the MO for the first PDCCH, or may be a subset of the MO for the first PDCCH; and
(36) a time unit to which an MO for the fourth PDCCH belongs, where
the MO for the fourth PDCCH may be the same as the MO for the second PDCCH, or may be a subset of the MO for the second PDCCH.

It can be understood that, in Example 3, a transmission resource for the PUCCH or the PUSCH is determined comprehensively based on time units occupied by more than one SSB sets (for example, the first SSB set and the second SSB set) or a time unit corresponding to an MO for a SIB-1 or paging PDCCH on an additional BWP.

In an implementation, transmission of the PUCCH or the PUSCH may be repetition transmission, and a resource for repetition transmission of the PUCCH or PUSCH may be determined in the following two modes.

First mode: The terminal performs transmission on N consecutive slots. If one of symbols allocated in a slot is a symbol used for the downlink transmission, the terminal does not perform repetition transmission of the PUCCH or the PUSCH in the slot (transmission is performed in all available slots of the N slots).

Second mode: The terminal determines N available slots for repetition transmission. If one of symbols allocated in a slot is a symbol used for the downlink transmission, the slot is not an available slot, and the terminal continues to determine whether a subsequent slot is an available slot, until the N available slots are determined for repetition transmission of the PUCCH or the PUSCH.

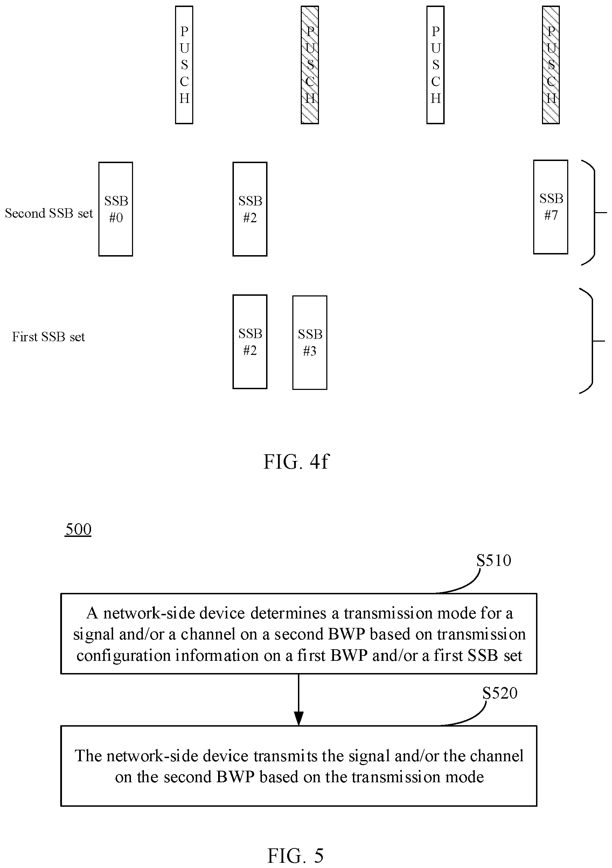

As shown in FIG. 4f, in the case of a half-duplex terminal on an FDD frequency band or in the case of an asymmetric spectrum, the terminal and/or the network-side device cannot simultaneously perform transmission and reception. For example, in a case that the network-side device transmits an SSB or perform other downlink transmission at any frequency location on a symbol, the terminal no longer performs uplink transmission (for example, "shaded PUSCHs" shown in FIG. 4f) on the same symbol.

Alternatively, the terminal does not expect overlapping, on symbols, between PUSCH or PUCCH transmission scheduled or configured by the network-side device and transmission of an SSB (an SSB in any SSB set) at any frequency location and/or transmission of the first to the fourth PDCCHs. In other words, the PUSCH or PUCCH transmission scheduled or configured by the network-side device should be prevented from overlapping with the downlink transmission (for example, the first SSB set and the second SSB set) on symbols. A shaded part shown in FIG. 4f indicates that the PUSCH is not transmitted on the symbol.

In this embodiment, corresponding to the skipping, by the terminal, transmitting the physical uplink channel in a first time unit, the network-side device may skip receiving the physical uplink channel in a second time unit.

The second time unit includes at least one of the following (41) to (46):
(41) a time unit in which an SSB in the first SSB set is transmitted;
(42) a time unit in which an SSB in the second SSB set is transmitted;
(43) a time unit to which the MO for the first PDCCH belongs;
(44) a time unit to which the MO for the second PDCCH belongs;
(45) a time unit to which an MO for the third PDCCH belongs; and
(46) a time unit to which an MO for the fourth PDCCH belongs.

It can be understood that the second time unit may be the same as or different from the first time unit. This is not limited. In addition, for implementation processes of (41) to (46), refer to the descriptions of the foregoing (31) to (36). Details are not described herein again.

### Example 4

Assuming that the channel on the second BWP is the second SSB set, the transmitting, by the terminal, an SSB in the second SSB set on the second BWP based on the transmission mode includes: The terminal may receive the second SSB set by using a reception parameter (for example, a beam, power, or a codebook) that is the same as that for the first SSB set.

Correspondingly, the network-side device may also transmit the second SSB set by using a transmission parameter (for example, a beam, power, or a codebook) that is the same as that for the first SSB set. For example, the network-side device transmits the first SSB set at a first frequency location, where the first SSB set includes N CD-SSBs; and the network configures a first downlink BWP, where the first downlink BWP is an initial downlink BWP for transmitting a first PDCCH for scheduling the SIB-1, a PDSCH for the paging message, and a PDCCH for scheduling the PDSCH.

For example, still as shown in FIG. 4b and FIG. 4c, transmission periodicities of the second SSB set and the first SSB set are also different, and a transmission periodicity of the second SSB set is greater than or equal to a transmission periodicity of the first SSB set. In this case, a transmission time period (half-frame) of the second SSB set is a subset of a transmission time period (half-frame) of the first SSB set.

Alternatively, a process of transmitting the second SSB set by the network-side device includes: Index values of transmitted SSBs in the second SSB set are the same as index values of transmitted SSBs in the first SSB set, or SSBs included in the second SSB set are a subset of SSBs included in the first SSB set.

To sum up, duration in which the second SSB set is transmitted or an SSB transmitted within the duration is a subset of the first SSB set. In other words, an SSB in the second SSB set can be transmitted only on a symbol on which an SSB in the first SSB set is transmitted.

FIG. 5 is a schematic flowchart of a transmission method 500 according to an example embodiment of this application. The method 500 may be performed by a network-side device but is not limited thereto, and may be specifically performed by hardware and/or software installed in the network-side device. In this embodiment, the method 500 may include at least the following steps.

S510: The network-side device determines a transmission mode for a signal and/or a channel on a second BWP based on transmission configuration information on a first BWP and/or a first SSB set.

S520: The network-side device transmits the signal and/or the channel on the second BWP based on the transmission mode.

For implementation processes of S510 and S520, refer to related descriptions in the method embodiments 200 and 300. To avoid repetition, details are not described herein again.

In a possible implementation, an SSB in the first SSB set meets at least one of the following characteristics: being a CD-SSB; and being configured within the first BWP.

In a possible implementation, the transmission configuration on the first BWP includes at least one of the following: a monitoring occasion MO for a first PDCCH, where the first PDCCH is used for scheduling a SIB; and an MO for a second PDCCH, where the second PDCCH is a paging PDCCH.

In another possible implementation, the signal on the second BWP includes a second SSB set; and/or the channel on the second BWP includes at least one of the following: a third PDCCH, where the third PDCCH is used for scheduling a SIB; a fourth PDCCH, where the fourth PDCCH is a paging PDCCH; and a physical uplink channel, where the physical uplink channel includes a physical uplink shared channel PUSCH and a physical uplink control channel PUCCH.

In another possible implementation, index values of SSBs in the second SSB set are the same as index values of SSBs in the first SSB set, or index values of SSBs in the second SSB set are a subset of index values of SSBs in the first SSB set.

In another possible implementation, when an index value of a second SSB in the second SSB set is the same as an index value of a first SSB in the first SSB set, a transmission parameter for the first SSB is the same as a transmission parameter for the second SSB.

In another possible implementation, the transmitting, by the network-side device, the third PDCCH on the second BWP based on the transmission mode includes: in a case that MOs for the third PDCCH and SSBs in the second SSB set are in a one-to-one correspondence, transmitting the third PDCCH on the second BWP according to an order of transmission time of the SSBs in the second SSB set, where transmission parameters of the third PDCCH and an SSB corresponding to the third PDCCH are quasi-co-located; and/or the transmitting, by the network-side device, the fourth PDCCH on the second BWP based on the transmission mode includes: in a case that MOs for the fourth PDCCH and SSBs in the second SSB set are in a one-to-one correspondence, transmitting the fourth PDCCH on the second BWP according to an order of transmission time of the SSBs in the second SSB set, where transmission parameters of the fourth PDCCH and an SSB corresponding to the third PDCCH are quasi-co-located.

In another possible implementation, the transmitting, by the network-side device, the physical uplink channel on the second BWP based on the transmission mode includes: skipping receiving the physical uplink channel in a second time unit, where the second time unit includes at least one of the following: a time unit in which an SSB in the first SSB set is transmitted; a time unit in which an SSB in the second SSB set is transmitted; a time unit to which the MO for the first PDCCH belongs; a time unit to which the MO for the second PDCCH belongs; a time unit to which an MO for the third PDCCH belongs; and a time unit to which an MO for the fourth PDCCH belongs.

It can be understood that, for implementation processes of the foregoing implementations provided in this embodiment, reference may be made to related descriptions in the method embodiment 200 or 300. To avoid repetition, details are not described herein again.

In this embodiment, the network-side device determines the transmission mode for the signal and/or the channel on the second BWP based on the transmission configuration information on the first BWP and/or the first SSB set, and transmits the signal and/or the channel on the second BWP based on the transmission mode. This can determine transmission behavior on the second BWP, reduce transmission load on the first BWP, avoid problems such as transmission congestion, and improve wireless communication performance.

It should be noted that the transmission methods 200 to 500 provided in the embodiments of this application may be performed by a transmission apparatus, or by a control module that is in the transmission apparatus and that is configured to perform the transmission methods 200 to 500. In the embodiments of this application, a transmission apparatus provided in the embodiments of this application is described by using an example in which the transmission apparatus performs the transmission methods 200 to 500.

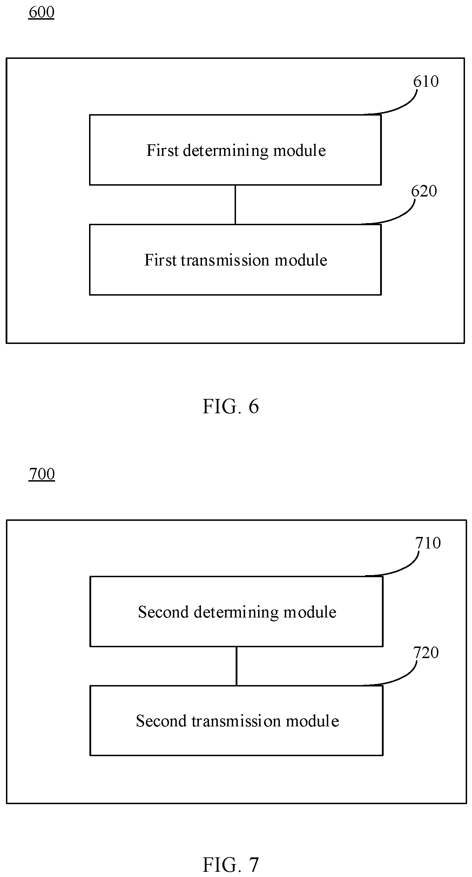

FIG. 6 is a schematic structural diagram of a transmission apparatus 600 according to an example embodiment of this application. The transmission apparatus 600 includes: a first determining module 610, configured to determine a transmission mode for a signal and/or a channel on a second BWP based on transmission configuration information on a first BWP and/or a first SSB set; and a first transmission module 620, configured to transmit the signal and/or the channel on the second BWP based on the transmission mode.

Optionally, an SSB in the first SSB set meets at least one of the following characteristics: being a cell-defined CD-SSB; and being configured within the first BWP.

Optionally, the transmission configuration on the first BWP includes at least one of the following: an MO for a first PDCCH, where the first PDCCH is used for scheduling a SIB; and an MO for a second PDCCH, where the second PDCCH is a paging PDCCH.

Optionally, the signal on the second BWP includes a second SSB set; and/or the channel on the second BWP includes at least one of the following: a third PDCCH, where the third PDCCH is used for scheduling a SIB; a fourth PDCCH, where the fourth PDCCH is a paging PDCCH; and a physical uplink channel, where the physical uplink channel includes a physical uplink shared channel PUSCH and/or a physical uplink control channel PUCCH.

Optionally, a periodicity of the second SSB set is not less than a periodicity of the first SSB set.

Optionally, index values of SSBs in the second SSB set are the same as index values of SSBs in the first SSB set, or index values of SSBs in the second SSB set are a subset of index values of SSBs in the first SSB set.

Optionally, the first transmission module 620 is configured to perform at least one of the following operations: monitoring the third PDCCH on a first MO based on the second BWP, where the first MO and the MO for the first PDCCH belong to a same time unit; monitoring the third PDCCH on a second MO based on the second BWP, where the second MO and an MO for a first PDCCH associated with a third SSB belong to a same time unit, and the third SSB is an SSB that is in the first SSB set and that has a same index value as an SSB in the second SSB set; and in a case that an SSB with a third index value in the first SSB set is transmitted but an SSB with the third index value in the second SSB set is not transmitted, skipping, based on the second BWP, monitoring the third PDCCH in a time unit corresponding to a third MO, where the third MO and a first PDCCH associated with the SSB with the third index value in the first SSB set belong to a same time unit.

Optionally, the first transmission module 620 is configured to perform at least one of the following operations: monitoring the fourth PDCCH on a fourth MO based on the second BWP, where the fourth MO and the MO for the second PDCCH belong to a same time unit; monitoring the fourth PDCCH on a fifth MO based on the second BWP, where the fifth MO and an MO for a second PDCCH associated with a fourth SSB belong to a same time unit, and the fourth SSB is an SSB that is in the first SSB set and that has a same index value as an SSB in the second SSB set; and in a case that an SSB with a fourth index value in the first SSB set is transmitted but an SSB with the fourth index value in the second SSB set is not transmitted, skipping, based on the second BWP, monitoring the fourth PDCCH in a time unit corresponding to a sixth MO, where the sixth MO and an MO for a second PDCCH associated with the SSB with the fourth index value in the first SSB set belong to a same time unit.

Optionally, a transmission mode for the physical uplink channel on the second BWP includes at least one of the following: whether to transmit the physical uplink channel; and whether to use the physical uplink channel as a transmission resource.

Optionally, the first transmission module 620 is configured to skip transmitting the physical uplink channel in a first time unit, where the first time unit includes at least one of the following: a time unit in which an SSB in the first SSB set is transmitted; a time unit in which an SSB in the second SSB set is transmitted; a time unit to which the MO for the first PDCCH belongs; a time unit to which the MO for the second PDCCH belongs; a time unit to which an MO for the third PDCCH belongs; and a time unit to which an MO for the fourth PDCCH belongs.

FIG. 7 is a schematic structural diagram of a transmission apparatus 700 according to an example embodiment of this application. The apparatus 700 includes: a second determining module 710, configured to determine a transmission mode for a signal and/or a channel on a second BWP based on transmission configuration information on a first BWP and/or a first SSB set; and a second transmission module 720, configured to transmit the signal and/or the channel on the second BWP based on the transmission mode.

Optionally, an SSB in the first SSB set meets at least one of the following characteristics: being a cell-defined CD-SSB; and being configured within the first BWP.

Optionally, the transmission configuration on the first BWP includes at least one of the following: an MO for a first PDCCH, where the first PDCCH is used for scheduling a SIB; and an MO for a second PDCCH, where the second PDCCH is a paging PDCCH.

Optionally, the signal on the second BWP includes a second SSB set; and/or the channel on the second BWP includes at least one of the following: a third PDCCH, where the third PDCCH is used for scheduling a SIB; a fourth PDCCH, where the fourth PDCCH is a paging PDCCH; and a physical uplink channel, where the physical uplink channel includes a physical uplink shared channel PUSCH and a physical uplink control channel PUCCH.

Optionally, index values of SSBs in the second SSB set are the same as index values of SSBs in the first SSB set, or index values of SSBs in the second SSB set are a subset of index values of SSBs in the first SSB set.

Optionally, when an index value of a second SSB in the second SSB set is the same as an index value of a first SSB in the first SSB set, a transmission parameter for the first SSB is the same as a transmission parameter for the second SSB.

Optionally, the second transmission module 720 is configured to: in a case that MOs for the third PDCCH and SSBs in the second SSB set are in a one-to-one correspondence, transmit the third PDCCH on the second BWP according to an order of transmission time of the SSBs in the second SSB set, where transmission parameters of the third PDCCH and an SSB corresponding to the third PDCCH are quasi-co-located; and/or the second transmission module is configured to: in a case that MOs for the fourth PDCCH and SSBs in the second SSB set are in a one-to-one correspondence, transmit the fourth PDCCH on the second BWP according to an order of transmission time of the SSBs in the second SSB set, where transmission parameters of the fourth PDCCH and an SSB corresponding to the third PDCCH are quasi-co-located.

Optionally, the second transmission module 720 is configured to skip receiving the physical uplink channel in a second time unit, where the second time unit includes at least one of the following: a time unit in which an SSB in the first SSB set is transmitted; a time unit in which an SSB in the second SSB set is transmitted; a time unit to which the MO for the first PDCCH belongs; a time unit to which the MO for the second PDCCH belongs; a time unit to which an MO for the third PDCCH belongs; and a time unit to which an MO for the fourth PDCCH belongs.

The transmission apparatus 600 or 700 in the embodiments of this application may be an apparatus, or an apparatus, an electronic device, or a network-side device with an operating system, or may be a component, an integrated circuit, or a chip in a terminal or a network-side device. The apparatus or the electronic device may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The transmission apparatus 600 or 700 provided in the embodiments of this application is capable of implementing the processes implemented in the method embodiments of FIG. 2 to FIG. 5, with the same technical effect achieved. To avoid repetition, details are not described herein again.

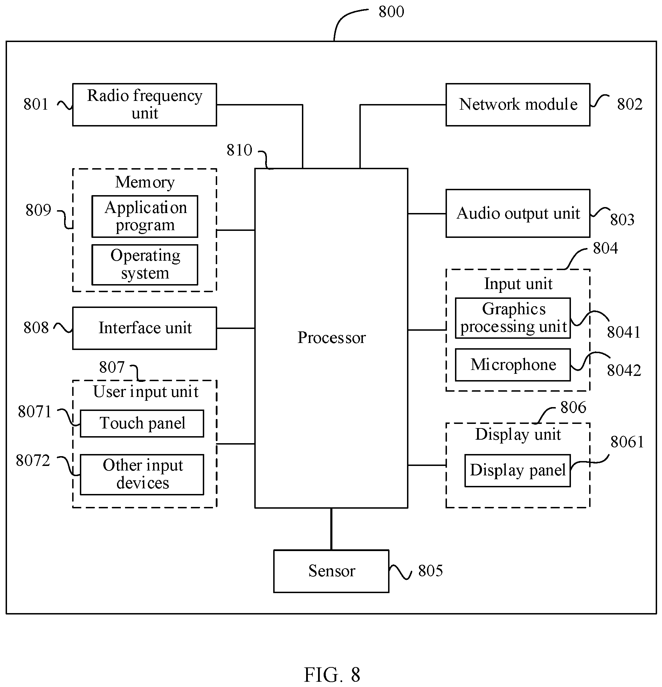

An embodiment of this application further provides a terminal, including a processor and a communication interface, where the communication interface is coupled to the processor, and the processor is configured to run a program or instructions, to implement the methods in the method embodiments 200 to 400. The terminal embodiment corresponds to the foregoing terminal-side method embodiment, and all implementation processes and implementations of the foregoing method embodiment are applicable to the terminal embodiment, with the same technical effect achieved. Specifically, FIG. 8 is a schematic diagram of a hardware structure of a terminal for implementing an embodiment of this application.

The terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

Persons skilled in the art can understand that the terminal 800 may further include a power supply (for example, a battery) that supplies power to each component. The power supply may be logically connected to the processor 810 by using a power management system, to implement functions such as charging management, discharging management, and power consumption management by using the power management system. The terminal structure shown in FIG. 8 does not constitute a limitation on the terminal. The terminal may include more or fewer components than those shown in the figure, or some components may be combined, or there may be a different component layout. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode, or the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function key (such as a volume control key or an on/off key), a trackball, a mouse, and a joystick. Details are not described herein.

In this embodiment of this application, the radio frequency unit 801 receives downlink data from a network-side device and then transmits the downlink data to the processor 810 for processing; and transmits uplink data to the network-side device. Usually, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may mainly include a program or instruction storage region and a data storage region. The program or instruction storage region may store an operating system, an application program or instructions required by at least one function (for example, an audio play function or an image play function), and the like. In addition, the memory 809 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 810 may include one or more processing units. Optionally, the processor 810 may integrate an application processor and a modem processor. The application processor mainly processes an operating system, a user interface, an application program or instructions, and the like. The modem processor mainly processes wireless communication, for example, a baseband processor. It can be understood that the modem processor may alternatively be not integrated in the processor 810.

The processor 810 is configured to: determine a transmission mode for a signal and/or a channel on a second BWP based on transmission configuration information on a first BWP and/or a first SSB set; and transmit the signal and/or the channel on the second BWP based on the transmission mode.

Optionally, an SSB in the first SSB set meets at least one of the following characteristics: being a cell-defined CD-SSB; and being configured within the first BWP.

Optionally, the transmission configuration on the first BWP includes at least one of the following: an MO for a first PDCCH, where the first PDCCH is used for scheduling a SIB; and an MO for a second PDCCH, where the second PDCCH is a paging PDCCH.

Optionally, the signal on the second BWP includes a second SSB set; and/or the channel on the second BWP includes at least one of the following: a third PDCCH, where the third PDCCH is used for scheduling a SIB; a fourth PDCCH, where the fourth PDCCH is a paging PDCCH; and a physical uplink channel, where the physical uplink channel includes a physical uplink shared channel PUSCH and/or a physical uplink control channel PUCCH.

Optionally, a periodicity of the second SSB set is not less than a periodicity of the first SSB set.

Optionally, index values of SSBs in the second SSB set are the same as index values of SSBs in the first SSB set, or index values of SSBs in the second SSB set are a subset of index values of SSBs in the first SSB set.

Optionally, the processor 610 is configured to perform at least one of the following operations: monitoring the third PDCCH on a first MO based on the second BWP, where the first MO and the MO for the first PDCCH belong to a same time unit; monitoring the third PDCCH on a second MO based on the second BWP, where the second MO and an MO for a first PDCCH associated with a third SSB belong to a same time unit, and the third SSB is an SSB that is in the first SSB set and that has a same index value as an SSB in the second SSB set; and in a case that an SSB with a third index value in the first SSB set is transmitted but an SSB with the third index value in the second SSB set is not transmitted, skipping, based on the second BWP, monitoring the third PDCCH in a time unit corresponding to a third MO, where the third MO and a first PDCCH associated with the SSB with the third index value in the first SSB set belong to a same time unit.

Optionally, the processor 610 is configured to perform at least one of the following operations: monitoring the fourth PDCCH on a fourth MO based on the second BWP, where the fourth MO and the MO for the second PDCCH belong to a same time unit; monitoring the fourth PDCCH on a fifth MO based on the second BWP, where the fifth MO and an MO for a second PDCCH associated with a fourth SSB belong to a same time unit, and the fourth SSB is an SSB that is in the first SSB set and that has a same index value as an SSB in the second SSB set; and in a case that an SSB with a fourth index value in the first SSB set is transmitted but an SSB with the fourth index value in the second SSB set is not transmitted, skipping, based on the second BWP, monitoring the fourth PDCCH in a time unit corresponding to a sixth MO, where the sixth MO and an MO for a second PDCCH associated with the SSB with the fourth index value in the first SSB set belong to a same time unit.

Optionally, a transmission mode for the physical uplink channel on the second BWP includes at least one of the following: whether to transmit the physical uplink channel; and whether to use the physical uplink channel as a transmission resource.

Optionally, the processor 610 is configured to skip transmitting the physical uplink channel in a first time unit, where the first time unit includes at least one of the following: a time unit in which an SSB in the first SSB set is transmitted; a time unit in which an SSB in the second SSB set is transmitted; a time unit to which the MO for the first PDCCH belongs; a time unit to which the MO for the second PDCCH belongs; a time unit to which an MO for the third PDCCH belongs; and a time unit to which an MO for the fourth PDCCH belongs.

In this embodiment, the terminal determines the transmission mode for the signal and/or the channel on the second BWP based on the transmission configuration information on the first BWP and/or the first SSB set, and transmits the signal and/or the channel on the second BWP based on the transmission mode. This can determine transmission behavior on the second BWP, reduce transmission load on the first BWP, avoid problems such as transmission congestion, and improve wireless communication performance.

An embodiment of this application further provides a network-side device, including a processor and a communication interface, where the communication interface is coupled to the processor, and the processor is configured to run a program or instructions, to implement the method in the method embodiment 500. The network-side device embodiment corresponds to the foregoing method embodiment for the network-side device, and all implementation processes and implementations of the foregoing method embodiment are applicable to the network-side device embodiment, with the same technical effect achieved.

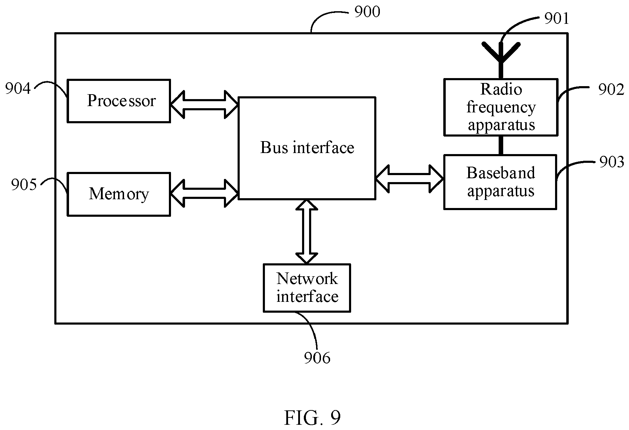

Specifically, an embodiment of this application further provides a network-side device. As shown in FIG. 9, the network-side device 900 includes an antenna 901, a radio frequency apparatus 902, and a baseband apparatus 903. The antenna 901 is connected to the radio frequency apparatus 902. In an uplink direction, the radio frequency apparatus 902 receives information through the antenna 901, and transmits the received information to the baseband apparatus 903 for processing. In a downlink direction, the baseband apparatus 903 processes to-be-transmitted information, and transmits the information to the radio frequency apparatus 902; and the radio frequency apparatus 902 processes the received information and then transmits the information through the antenna 901.

The frequency band processing apparatus may be located in the baseband apparatus 903. The method performed by the network-side device in the foregoing embodiments may be implemented in the baseband apparatus 903, and the baseband apparatus 903 includes a processor 904 and a memory 905.

The baseband apparatus 903 may include, for example, at least one baseband processing unit, where a plurality of chips are disposed on the baseband processing unit. As shown in FIG. 9, one of the chips is, for example, the processor 904, and connected to the memory 905, to invoke the program in the memory 905 to perform the operations of the network-side device shown in the foregoing method embodiments.

The baseband apparatus 903 may further include a network interface 906, configured to exchange information with the radio frequency apparatus 902. The interface is, for example, a common public radio interface (common public radio interface, CPRI for short).

Specifically, the network-side device in this embodiment of the present invention further includes instructions or a program stored in the memory 905 and capable of running on the processor 904, and the processor 904 invokes the instructions or program in the memory 905 to perform the method performed by the modules shown in FIG. 7, with the same technical effect achieved. To avoid repetition, details are not described herein again.

An embodiment of this application further provides a readable storage medium. The readable storage medium stores a program or instructions. When the program or instructions are executed by a processor, the processes of the transmission method embodiments 200 to 500 are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-Only Memory, ROM).

An embodiment of this application further provides a chip. The chip includes a processor and a communication interface. The communication interface is coupled to the processor. The processor is configured to run a program or instructions for a network-side device, to implement the processes of the foregoing transmission method embodiments 200 to 500, with the same technical effect achieved. To avoid repetition, details are not described herein again.

It should be understood that the chip provided in the embodiments of this application may also be referred to as a system-level chip, a system on chip, a chip system, a system-on-a-chip, or the like.

An embodiment of this application further provides a computer program product. The computer program product includes a processor, a memory, and a program or instructions stored in the memory and capable of running on the processor. When the program or instructions are executed by the processor, the processes of the foregoing transmission method embodiments 200 to 500 are implemented, with the same technical effect achieved. To avoid repetition, details are not described herein again.

It should be noted that, in this specification, the terms "include" and "comprise", or any of their variants are intended to cover a non-exclusive inclusion, so that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a ..." does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing descriptions of the implementations, persons skilled in the art can clearly understand that the methods in the foregoing embodiments may be implemented by using software in combination with a necessary common hardware platform, or certainly may be implemented by using hardware. However, in most cases, the former is a preferred implementation. Based on such an understanding, the technical solutions of this application essentially or the part contributing to the conventional technology may be implemented in a form of a computer software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the methods in the embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make many modifications without departing from the purposes of this application and the protection scope of the claims, and all the modifications shall fall within the protection scope of this application.

## Claims

1. A transmission method, comprising:
determining, by a terminal, a transmission mode for a signal and/or a channel on a second BWP based on transmission configuration information on a first bandwidth part BWP and/or a first synchronization signal block set SSB set; and
transmitting, by the terminal, the signal and/or the channel on the second BWP based on the transmission mode.

2. The method according to claim 1, wherein an SSB in the first SSB set meets at least one of the following characteristics:
being a cell-defined CD-SSB; and
being configured within the first BWP.

3. The method according to claim 1 or 2, wherein the transmission configuration on the first BWP comprises at least one of the following:
a monitoring occasion MO for a first physical downlink control channel PDCCH, wherein the first PDCCH is used for scheduling a system information block SIB; and
an MO for a second PDCCH, wherein the second PDCCH is a paging PDCCH.

4. The method according to any one of claims 1 to 3, wherein
the signal on the second BWP comprises a second SSB set;
and/or
the channel on the second BWP comprises at least one of the following:
a third PDCCH, wherein the third PDCCH is used for scheduling a SIB;
a fourth PDCCH, wherein the fourth PDCCH is a paging PDCCH; and
a physical uplink channel, wherein the physical uplink channel comprises a physical uplink shared channel PUSCH and/or a physical uplink control channel PUCCH.

5. The method according to claim 4, wherein a periodicity of the second SSB set is not less than a periodicity of the first SSB set.

6. The method according to claim 4, wherein index values of SSBs in the second SSB set are the same as index values of SSBs in the first SSB set;
or
index values of SSBs in the second SSB set are a subset of index values of SSBs in the first SSB set.

7. The method according to claim 6, wherein in a case that an index value of a second SSB in the second SSB set is the same as an index value of a first SSB in the first SSB set, a first parameter of the first SSB is the same as or quasi-co-located with a first parameter of the second SSB.

8. The method according to claim 4, wherein the transmitting, by the terminal, the third PDCCH on the second BWP based on the transmission mode comprises at least one of the following:
monitoring the third PDCCH on a first MO based on the second BWP, wherein the first MO and the MO for the first PDCCH belong to a same time unit;
monitoring the third PDCCH on a second MO based on the second BWP, wherein the second MO and an MO for a first PDCCH associated with a third SSB belong to a same time unit, and the third SSB is an SSB that is in the first SSB set and that has a same index value as an SSB in the second SSB set; and
in a case that an SSB with a third index value in the first SSB set is transmitted but an SSB with the third index value in the second SSB set is not transmitted, skipping, based on the second BWP, monitoring the third PDCCH in a time unit corresponding to a third MO, wherein the third MO and an MO for a first PDCCH associated with the SSB with the third index value in the first SSB set belong to a same time unit.

9. The method according to claim 4, wherein the transmitting, by the terminal, the fourth PDCCH on the second BWP based on the transmission mode comprises at least one of the following:
monitoring the fourth PDCCH on a fourth MO based on the second BWP, wherein the fourth MO and the MO for the second PDCCH belong to a same time unit;
monitoring the fourth PDCCH on a fifth MO based on the second BWP, wherein the fifth MO and an MO for a second PDCCH associated with a fourth SSB belong to a same time unit, and the fourth SSB is an SSB that is in the first SSB set and that has a same index value as an SSB in the second SSB set; and
in a case that an SSB with a fourth index value in the first SSB set is transmitted but an SSB with the fourth index value in the second SSB set is not transmitted, skipping, based on the second BWP, monitoring the fourth PDCCH in a time unit corresponding to a sixth MO, wherein the sixth MO and an MO for a second PDCCH associated with the SSB with the fourth index value in the first SSB set belong to a same time unit.

10. The method according to claim 8 or 9, wherein in a case that an MO for a fifth PDCCH is associated with a fifth SSB with a fifth index value, a second parameter of the fifth PDCCH is the same as or quasi-co-located with a second parameter of the fifth SSB, wherein
in a case that the fifth PDCCH is the first PDCCH or the second PDCCH, the fifth SSB belongs to the first SSB set; or
in a case that the fifth PDCCH is the third PDCCH or the fourth PDCCH, the fifth SSB belongs to the second SSB set.

11. The method according to claim 4, wherein a transmission mode for the physical uplink channel on the second BWP comprises at least one of the following:
whether to transmit the physical uplink channel; and
whether to use the physical uplink channel as a transmission resource.

12. The method according to claim 4, wherein the transmitting, by the terminal, the physical uplink channel on the second BWP based on the transmission mode comprises:
skipping transmitting the physical uplink channel in a first time unit, wherein
the first time unit comprises at least one of the following:
a time unit in which an SSB in the first SSB set is transmitted;
a time unit in which an SSB in the second SSB set is transmitted;
a time unit to which the MO for the first PDCCH belongs;
a time unit to which the MO for the second PDCCH belongs;
a time unit to which an MO for the third PDCCH belongs; and
a time unit to which an MO for the fourth PDCCH belongs.

13. The method according to any one of claims 1 to 12, wherein the terminal operates in a half-duplex mode on an FDD frequency band, or the terminal operates on an asymmetric spectrum.

14. The method according to any one of claims 1 to 12, wherein the second BWP is a BWP configured for a redcap terminal.

15. A transmission method, wherein the method comprises:
determining, by a network-side device, a transmission mode for a signal and/or a channel on a second BWP based on transmission configuration information on a first bandwidth part BWP and/or a first synchronization signal block set SSB set; and
transmitting, by the network-side device, the signal and/or the channel on the second BWP based on the transmission mode.

16. The method according to claim 15, wherein an SSB in the first SSB set meets at least one of the following characteristics:
being a cell-defined CD-SSB; and
being configured within the first BWP.

17. The method according to claim 15 or 16, wherein the transmission configuration on the first BWP comprises at least one of the following:
a monitoring occasion MO for a first physical downlink control channel PDCCH, wherein the first PDCCH is used for scheduling a system information block SIB; and
an MO for a second PDCCH, wherein the second PDCCH is a paging PDCCH.

18. The method according to any one of claims 15 to 17, wherein the signal on the second BWP comprises a second SSB set;
and/or
the channel on the second BWP comprises at least one of the following:
a third PDCCH, wherein the third PDCCH is used for scheduling a SIB;
a fourth PDCCH, wherein the fourth PDCCH is a paging PDCCH; and
a physical uplink channel, wherein the physical uplink channel comprises a physical uplink shared channel PUSCH and a physical uplink control channel PUCCH.

19. The method according to claim 18, wherein index values of SSBs in the second SSB set are the same as index values of SSBs in the first SSB set;
or
index values of SSBs in the second SSB set are a subset of index values of SSBs in the first SSB set.

20. The method according to claim 18, wherein when an index value of a second SSB in the second SSB set is the same as an index value of a first SSB in the first SSB set, a transmission parameter for the first SSB is the same as a transmission parameter for the second SSB.

21. The method according to claim 18, wherein the transmitting, by the network-side device, the third PDCCH on the second BWP based on the transmission mode comprises:
in a case that MOs for the third PDCCH and SSBs in the second SSB set are in a one-to-one correspondence, transmitting the third PDCCH on the second BWP according to an order of transmission time of the SSBs in the second SSB set, wherein transmission parameters of the third PDCCH and an SSB corresponding to the third PDCCH are quasi-co-located;
and/or
the transmitting, by the network-side device, the fourth PDCCH on the second BWP based on the transmission mode comprises:
in a case that MOs for the fourth PDCCH and SSBs in the second SSB set are in a one-to-one correspondence, transmitting the fourth PDCCH on the second BWP according to an order of transmission time of the SSBs in the second SSB set, wherein transmission parameters of the fourth PDCCH and an SSB corresponding to the third PDCCH are quasi-co-located.

22. The method according to claim 18, wherein the transmitting, by the network-side device, the physical uplink channel on the second BWP based on the transmission mode comprises:
skipping receiving the physical uplink channel in a second time unit, wherein
the second time unit comprises at least one of the following:
a time unit in which an SSB in the first SSB set is transmitted;
a time unit in which an SSB in the second SSB set is transmitted;
a time unit to which the MO for the first PDCCH belongs;
a time unit to which the MO for the second PDCCH belongs;
a time unit to which an MO for the third PDCCH belongs; and
a time unit to which an MO for the fourth PDCCH belongs.

23. A transmission apparatus, comprising:
a first determining module, configured to determine a transmission mode for a signal and/or a channel on a second BWP based on transmission configuration information on a first bandwidth part BWP and/or a first synchronization signal block set SSB set; and
a first transmission module, configured to transmit the signal and/or the channel on the second BWP based on the transmission mode.

24. The apparatus according to claim 23, wherein an SSB in the first SSB set meets at least one of the following characteristics:
being a cell-defined CD-SSB; and
being configured within the first BWP.

25. The apparatus according to claim 23, wherein the transmission configuration on the first BWP comprises at least one of the following:
a monitoring occasion MO for a first physical downlink control channel PDCCH, wherein the first PDCCH is used for scheduling a system information block SIB; and
an MO for a second PDCCH, wherein the second PDCCH is a paging PDCCH.

26. The apparatus according to claim 25, wherein
the signal on the second BWP comprises a second SSB set;
and/or
the channel on the second BWP comprises at least one of the following:
a third PDCCH, wherein the third PDCCH is used for scheduling a SIB;
a fourth PDCCH, wherein the fourth PDCCH is a paging PDCCH; and
a physical uplink channel, wherein the physical uplink channel comprises a physical uplink shared channel PUSCH and/or a physical uplink control channel PUCCH.

27. The apparatus according to claim 26, wherein a periodicity of the second SSB set is not less than a periodicity of the first SSB set.

28. The apparatus according to claim 26, wherein index values of SSBs in the second SSB set are the same as index values of SSBs in the first SSB set;
or
index values of SSBs in the second SSB set are a subset of index values of SSBs in the first SSB set.

29. The apparatus according to claim 26, wherein the first transmission module is configured to perform at least one of the following operations:
monitoring the third PDCCH on a first MO based on the second BWP, wherein the first MO and the MO for the first PDCCH belong to a same time unit;
monitoring the third PDCCH on a second MO based on the second BWP, wherein the second MO and an MO for a first PDCCH associated with a third SSB belong to a same time unit, and the third SSB is an SSB that is in the first SSB set and that has a same index value as an SSB in the second SSB set; and
in a case that an SSB with a third index value in the first SSB set is transmitted but an SSB with the third index value in the second SSB set is not transmitted, skipping, based on the second BWP, monitoring the third PDCCH in a time unit corresponding to a third MO, wherein the third MO and a first PDCCH associated with the SSB with the third index value in the first SSB set belong to a same time unit.

30. The apparatus according to claim 26, wherein the first transmission module is configured to perform at least one of the following operations:
monitoring the fourth PDCCH on a fourth MO based on the second BWP, wherein the fourth MO and the MO for the second PDCCH belong to a same time unit;
monitoring the fourth PDCCH on a fifth MO based on the second BWP, wherein the fifth MO and an MO for a second PDCCH associated with a fourth SSB belong to a same time unit, and the fourth SSB is an SSB that is in the first SSB set and that has a same index value as an SSB in the second SSB set; and
in a case that an SSB with a fourth index value in the first SSB set is transmitted but an SSB with the fourth index value in the second SSB set is not transmitted, skipping, based on the second BWP, monitoring the fourth PDCCH in a time unit corresponding to a sixth MO, wherein the sixth MO and an MO for a second PDCCH associated with the SSB with the fourth index value in the first SSB set belong to a same time unit.

31. The apparatus according to claim 26, wherein a transmission mode for the physical uplink channel on the second BWP comprises at least one of the following:
whether to transmit the physical uplink channel; and
whether to use the physical uplink channel as a transmission resource.

32. The apparatus according to claim 26, wherein the first transmission module is configured to skip transmitting the physical uplink channel in a first time unit, wherein
the first time unit comprises at least one of the following:
a time unit in which an SSB in the first SSB set is transmitted;
a time unit in which an SSB in the second SSB set is transmitted;
a time unit to which the MO for the first PDCCH belongs;
a time unit to which the MO for the second PDCCH belongs;
a time unit to which an MO for the third PDCCH belongs; and
a time unit to which an MO for the fourth PDCCH belongs.

33. A transmission apparatus, wherein the apparatus comprises:
a second determining module, configured to determine a transmission mode for a signal and/or a channel on a second BWP based on transmission configuration information on a first bandwidth part BWP and/or a first synchronization signal block set SSB set; and
a second transmission module, configured to transmit the signal and/or the channel on the second BWP based on the transmission mode.

34. The apparatus according to claim 33, wherein an SSB in the first SSB set meets at least one of the following characteristics:
being a cell-defined CD-SSB; and
being configured within the first BWP.

35. The apparatus according to claim 33 or 34, wherein the transmission configuration on the first BWP comprises at least one of the following:
a monitoring occasion MO for a first physical downlink control channel PDCCH, wherein the first PDCCH is used for scheduling a system information block SIB; and
an MO for a second PDCCH, wherein the second PDCCH is a paging PDCCH.

36. The apparatus according to claim 35, wherein the signal on the second BWP comprises a second SSB set;
and/or
the channel on the second BWP comprises at least one of the following:
a third PDCCH, wherein the third PDCCH is used for scheduling a SIB;
a fourth PDCCH, wherein the fourth PDCCH is a paging PDCCH; and
a physical uplink channel, wherein the physical uplink channel comprises a physical uplink shared channel PUSCH and a physical uplink control channel PUCCH.

37. The apparatus according to claim 36, wherein index values of SSBs in the second SSB set are the same as index values of SSBs in the first SSB set;
or
index values of SSBs in the second SSB set are a subset of index values of SSBs in the first SSB set.

38. The apparatus according to claim 36, wherein when an index value of a second SSB in the second SSB set is the same as an index value of a first SSB in the first SSB set, a transmission parameter for the first SSB is the same as a transmission parameter for the second SSB.

39. The apparatus according to claim 36, wherein the second transmission module is configured to: in a case that MOs for the third PDCCH and SSBs in the second SSB set are in a one-to-one correspondence, transmit the third PDCCH on the second BWP according to an order of transmission time of the SSBs in the second SSB set, wherein transmission parameters of the third PDCCH and an SSB corresponding to the third PDCCH are quasi-co-located;
and/or
the second transmission module is configured to: in a case that MOs for the fourth PDCCH and SSBs in the second SSB set are in a one-to-one correspondence, transmit the fourth PDCCH on the second BWP according to an order of transmission time of the SSBs in the second SSB set, wherein transmission parameters of the fourth PDCCH and an SSB corresponding to the third PDCCH are quasi-co-located.

40. The apparatus according to claim 36, wherein the second transmission module is configured to skip receiving the physical uplink channel in a second time unit, wherein
the second time unit comprises at least one of the following:
a time unit in which an SSB in the first SSB set is transmitted;
a time unit in which an SSB in the second SSB set is transmitted;
a time unit to which the MO for the first PDCCH belongs;
a time unit to which the MO for the second PDCCH belongs;
a time unit to which an MO for the third PDCCH belongs; and
a time unit to which an MO for the fourth PDCCH belongs.

41. A terminal, comprising a processor, a memory, and a program or instructions stored in the memory and capable of running on the processor, wherein when the program or instructions are executed by the processor, the steps of the method according to any one of claims 1 to 14 are implemented.

42. A network-side device, comprising a processor, a memory, and a program or instructions stored in the memory and capable of running on the processor, wherein when the program or instructions are executed by the processor, the steps of the method according to any one of claims 15 to 22 are implemented.

43. A readable storage medium, wherein the readable storage medium stores a program or instructions, and when the program or instructions are executed by a processor, the method according to any one of claims 1 to 14 is implemented, or the steps of the method according to any one of claims 15 to 22 are implemented.
